(19) Europäisches Patentamt

European Patent Office

Office européen des brevets

(11) EP 1 715 600 A1

(12) EUROPEAN PATENT APPLICATION
published in accordance with Art. 158(3) EPC

(43) Date of publication:
25.10.2006 Bulletin 2006/43

(51) Int Cl.:
$H04B\ 7/26$ (2006.01)    $H04B\ 7/08$ (2006.01)

(21) Application number: 05710496.0

(22) Date of filing: 22.02.2005

(86) International application number:
PCT/JP2005/002765

(87) International publication number:
WO 2005/083907 (09.09.2005 Gazette 2005/36)

(84) Designated Contracting States:
AT BE BG CH CY CZ DE DK EE ES FI FR GB GR
HU IE IS IT LI LT LU MC NL PL PT RO SE SI SK TR

(30) Priority: 26.02.2004 JP 2004051587

(71) Applicant: MATSUSHITA ELECTRIC INDUSTRIAL
CO., LTD.
Kadoma-shi, Osaka 571-8501 (JP)

(72) Inventors:
• NISHIO, Akihiko
 c/o Matsu.Electric Indust. Ltd
 Shiromi, Chuo-ku, Osaka 540-6319 (JP)

• MIYOSHI, Kenichi
 c/o Matsu.Electric Indust. Ltd
 Shiromi, Chuo-ku, Osaka 540-6319 (JP)

(74) Representative: Grünecker, Kinkeldey,
Stockmair & Schwanhäusser
Anwaltssozietät
Maximilianstrasse 58
80538 München (DE)

(54) MOBILE STATION DEVICE AND TRANSMISSION ANTENNA SELECTION METHOD IN THE MOBILE STATION DEVICE

(57) A mobile station apparatus enabling increases in communication system capacity when uplink high-speed packet communication is performed and the like. The mobile station having a plurality of antennas, antenna 1 and antenna 2, compares the reception power of a signal $r_{21}$ received in antenna 1 with the reception power of a signal $r_{22}$ received in antenna 2 among signals transmitted from base station 2 of an adjacent cell, selects antenna 1 as a transmission antenna when "the reception power of $r_{21}$ < the reception power of $r_{22}$", while selecting antenna 2 as a transmission antenna when "the reception power of $r_{21} \geqq$ the reception power of $r_{22}$", transmits an uplink signal to base station 1 from the selected antenna, and reduces interference caused in base station 2 of the adjacent cell.

FIG.2

**Description**

Technical Field

The present invention relates to a mobile station apparatus and transmission antenna selecting method in the mobile station apparatus.

Background Art

In a TDD scheme in a mobile communication system, frames are separated into uplink frames (transmission frames in a mobile station, reception frames in a base station) and downlink frames (reception frames in the mobile station, transmission frames in the base station). Further, in the TDD scheme, an uplink signal and downlink signal are communicated in the same frequency band, and the propagation path of the uplink signal and downlink signal is therefore the same. Using this property of the TDD scheme, there is such a technique that performs antenna selection transmission diversity in which a downlink signal is transmitted from an antenna with higher reception power of an uplink signal (i.e. antenna with a better state of the propagation path) in a base station having two antennas (see, for example, Patent Document 1). If a plurality of antennas are provided with the mobile station, it is also possible to perform such antenna selection transmission diversity in the mobile station as in the base station.

As a next-generation communication scheme, various techniques have been studied to implement higher-speed packet transmission in the cellular environment. Currently, downlink high-speed packet transmission has mainly been studied actively, but to improve transmission efficiency in the entire communication system, it is indispensable to implement not only high-speed packet transmission on downlink, but also high-speed and large-capacity on uplink. In such uplink high-speed packet transmission, a high-speed packet transmitted from a mobile station moving near a cell boundary becomes a cause of interference occurring in an adjacent cell. Particularly, when transmission power control is performed on uplink, the transmission power of a high-speed packet transmitted from a mobile station becomes high, and causes extremely high interference in the adjacent cell, thereby decreasing the capacity of the entire communication system. Accordingly, to implement uplink high-speed packet transmission in a cellular system, it is necessary to reduce interference in an adjacent cell caused by a mobile station near a cell boundary.

Patent Document 1: Japanese Patent Application Laid-Open No.2000-353994

Disclosure of Invention

Problems to be Solved by the Invention

However, when conventional antenna selection transmission diversity is applied to a mobile station without change, transmission antennas are selected based on states of propagation paths between a plurality of antennas of the mobile station and a base station (i.e. base station communicating with the mobile station) of a cell where the mobile station is located. Therefore, when a state is also good in a propagation path between a selected antenna and a base station of an adjacent cell, interference caused in the adjacent cell becomes high. Under such circumstances, increase of the system capacity to implement up linkhigh-speed packet transmission cannot be expected.

It is an object of the present invention to provide a mobile station apparatus and transmission antenna selecting method in the mobile station apparatus for enabling increases in communication system capacity in performing uplink high-speed packet transmission and the like.

Means for Solving the Problem

A mobile station apparatus of the invention adopts a configuration provided with a plurality of antennas that receives both a signal transmitted from a first base station and another signal transmitted from a second base station of an adjacent cell that is adjacent to a cell of the first base station, a selecting section that selects an antenna that causes lowest interference in the adjacent cell from among the plurality of antennas that the mobile station has, and a transmission section that transmits a signal to the first base station from the selected antenna.

Advantageous Effect of the Invention

According to the invention, in the case of performing uplink high-speed packet transmission and the like, it is possible to reduce interference caused in an adjacent cell and increase the communication system capacity.

Brief Description of Drawings

FIG.1 is a configuration diagram of a mobile communication system according to Embodiment 1 of the present invention;

FIG.2 is a block diagram illustrating a configuration of a mobile station according to Embodiment 1 of the present invention;

FIG.3 is a block diagram illustrating a configuration of a mobile station according to Embodiment 2 of the present invention;

FIG.4 is a simulation result of interference power versus cumulative distribution function according to Embodiment 2 of the present invention;

FIG.5 is a configuration diagram of a mobile communication system according to Embodiment 3 of the present invention;

FIG.6 is a block diagram illustrating a configuration of a mobile station according to Embodiment 3 of the present invention;

FIG.7 is a block diagram illustrating a configuration of a mobile station according to Embodiment 4 of the present invention;

FIG.8 is a block diagram illustrating a configuration of a mobile station according to Embodiment 5 of the present invention;

FIG.9 is a table showing a correspondence between a MCS level and reception power according to Embodiment 5 of the present invention;

FIG.10 is a flowchart illustrating the operation of the mobile station according to Embodiment 5 of the present invention;

FIG.11 is a block diagram illustrating a configuration of a mobile station according to Embodiment 6 of the present invention; and

FIG.12 is a block diagram illustrating another configuration of the mobile station according to Embodiment 6 of the present invention.

Best Mode for Carrying Out the Invention

Embodiments of the present invention will be specifically described below with reference to accompanying drawings.

(Embodiment 1)

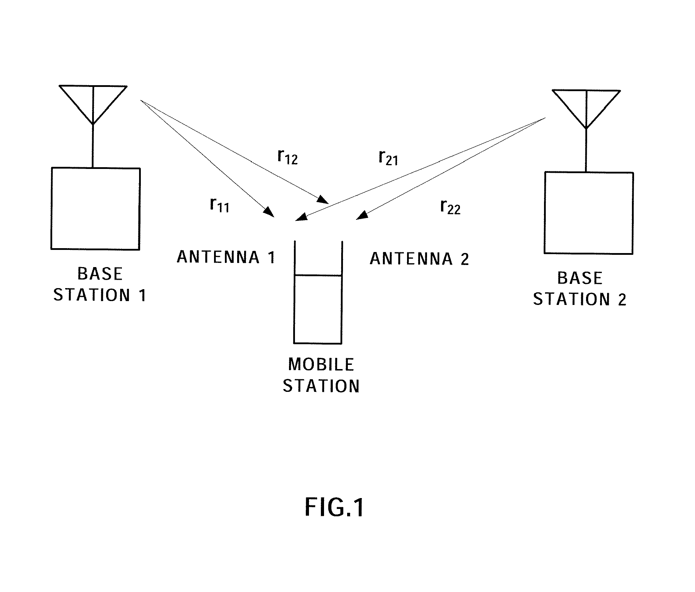

FIG.1 is a configuration diagram of a mobile communication system according to Embodiment 1 of the present invention. The mobile communication system includes a mobile station, and base station 1 and base station 2, and communications between the mobile station and each base station are performed in a TDD scheme. Mobile station 1 has two antennas, and each of base station 1 and base station 2 has a single antenna. It is assumed that the mobile station receives a downlink signal with both antenna 1 and antenna 2, and transmits an uplink signal from one of antenna 1 and antenna 2. Further, the mobile station is currently held in a cell of base station 1, and base station 1 is currently communicating with the mobile station and a destination of transmission of the uplink signal from the mobile station. Further, base station 2 is a base station of a cell adjacent to the cell of base station 1. In this embodiment, the mobile station selects an antenna causing lower interference in the cell (adjacent cell) of base station 2 from antenna 1 and antenna 2 as a transmission antenna, and transmits an uplink signal to base station 1 from the selected antenna. Here, the uplink signal transmitted to base station 1 is, for example, high-speed packet data. In addition, in FIG.1, $r_{11}$ denotes a downlink signal which is transmitted from base station 1 and received in antenna 1 of the mobile station, $r_{12}$ denotes a downlink signal which is transmitted from base station 1 and received in antenna 2 of the mobile station, $r_{21}$ denotes a downlink signal which is transmitted from base station 2 and received in antenna 1 of the mobile station, and $r_{22}$ denotes a downlink signal which is transmitted from base station 2 and received in antenna 2 of the mobile station. Although a plurality of adjacent cells exists around the cell of base station 1, the adjacent cell is a cell providing the highest reception power except the cell of base station 1, and is detected by a cell search.

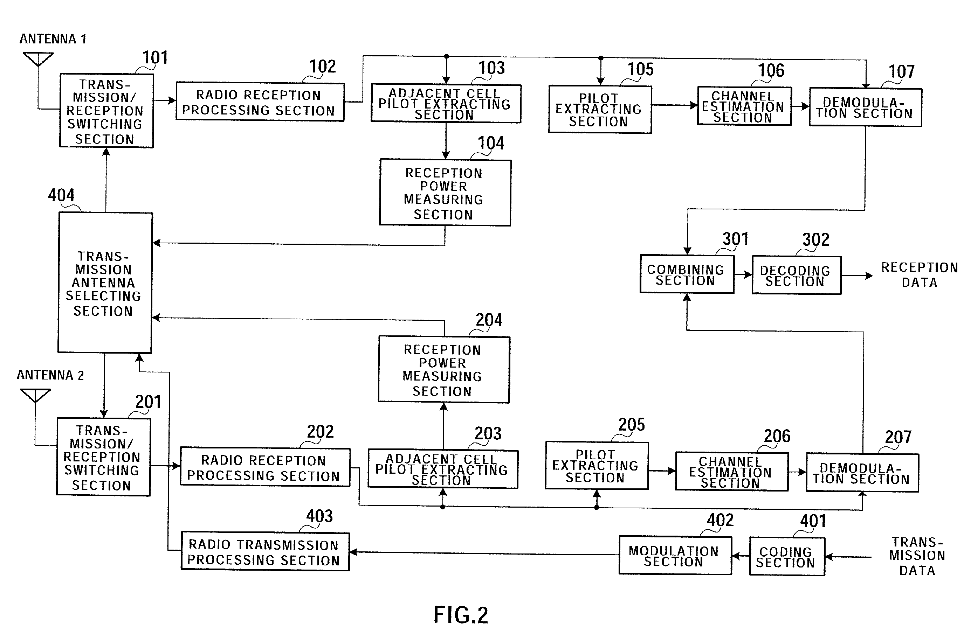

FIG.2 is a block diagram illustrating a configuration of the mobile station according to Embodiment 1 of the present invention. Each of antenna 1 and antenna 2 receives both a downlink signal transmitted from base station 1 and another downlink signal transmitted from base station 2. Transmission/reception switching section 101, radio reception processing section 102, adjacent cell pilot extracting section 103, reception power measuring section 104, pilot extracting section 105, channel estimation section 106 and demodulation section 107 are provided in association with antenna 1. Meanwhile, transmission/reception switching section 201, radio reception processing section 202, adjacent cell pilot extracting section 203, reception power measuring section 204, pilot extracting section 205, channel estimation section 206 and demodulation section 207 are provided in association with antenna 2.

Transmission/reception switching section 101 switches transmission and reception of antenna 1, and inputs a downlink signal received in antenna 1 to radio reception processing section 102 in a reception frame, and transmits an uplink signal input from radio transmission processing section 403 to base station 1 from antenna 1 in a transmission frame. Radio reception processing section 102 performs predetermined radio processing such as downconverting and the like on received signals $r_{11}$ and $r_{21}$ and inputs to adjacent cell pilot extracting section 103, pilot extracting section 105 and demodulation section 107. Adjacent cell pilot extracting section 103 extracts a pilot signal $p_{21}$ contained in the received signal $r_{21}$ (i.e. a pilot signal which is transmitted from base station 2 of the adjacent cell and received in antenna 1 of the mobile station), and inputs the extracted pilot signal $p_{21}$ to reception power measuring section 104. This extraction is performed in a CDMA scheme by despreading $r_{21}$ with a spreading code assigned to the pilot signal $p_{21}$, while being performed in an OFDM scheme by extracting a subcarrier assigned to the pilot signal $p_{21}$. Reception power measuring section 104 measures reception power $|p_{21}|$ of the pilot signal $p_{21}$, and inputs the measurement result to transmission antenna selecting section 404.

Pilot extracting section 105 extracts a pilot signal $p_{11}$ contained in the received signal $r_{11}$ (i.e. a pilot signal which is transmitted from base station 1 and received in antenna 1 of the mobile station), and inputs the extracted pilot signal $p_{11}$ to channel estimation section 106. Using the pilot signal $p_{11}$, channel estimation section 106 obtains a channel estimation value between antenna 1 and base station 1 and inputs to demodulation section 107. Demodulation section 107 demodulates the received signal $r_{11}$ while performing compensation for phase rotation and the like based on the input channel estimation value. In demodulation section 107, in the CDMA scheme, the received signal $r_{11}$ is despread, and then, demodulated in QPSK or the like, and reception symbols are generated. In the OFDM scheme, the received signal $r_{11}$ is transformed into a frequency-domain signal by FFT, and then, reception symbols are generated for each subcarrier. The generated reception symbols are input to combining section 301.

Meanwhile, transmission/reception switching section 201 switches transmission and reception of antenna 2, and inputs a downlink signal received in antenna 2 to radio reception processing section 202 in a reception frame, and transmits an uplink signal input from radio transmission processing section 403 to base station 1 from antenna 2 in a transmission frame. Radio reception processing section 202 performs predetermined radio processing such as downconverting and the like on received signals $r_{12}$ and $r_{22}$ and inputs to adjacent cell pilot extracting section 203, pilot extracting section 205 and demodulation section 207. Adjacent cell pilot extracting section 203 extracts a pilot signal $p_{22}$ contained in the received signal $r_{22}$ (i.e. a pilot signal which is transmitted from base station 2 of the adjacent cell and received in antenna 2 of the mobile station), and inputs the extracted pilot signal $p_{22}$ to reception power measuring section 204. This extraction is performed in the CDMA scheme by despreading $r_{22}$ with a spreading code assigned to the pilot signal $p_{22}$, while being performed in the OFDM scheme by extracting a subcarrier assigned to the pilot signal $p_{22}$. Reception power measuring section 204 measures reception power $|p_{22}|$ of the pilot signal $p_{22}$, and inputs the measurement result to transmission antenna selecting section 404.

Pilot extracting section 205 extracts a pilot signal $p_{12}$ contained in the received signal $r_{12}$ (i.e. a pilot signal which is transmitted from base station 1 and received in antenna 2 of the mobile station), and inputs the extracted pilot signal $p_{12}$ to channel estimation section 206. Using the pilot signal $p_{12}$, channel estimation section 206 obtains a channel estimation value between antenna 2 and base station 1, and inputs to demodulation section 207. Demodulation section 207 demodulates the received signal $r_{12}$ while performing compensation for phase rotation and the like based on the input channel estimation value. In demodulation section 207, in the CDMA scheme, the received signal $r_{12}$ is despread, and then, demodulated in QPSK or the like, and reception symbols are generated. In the OFDM scheme, the received signal $r_{12}$ is transformed into a frequency-domain signal by FFT, and then, reception symbols are generated for each subcarrier. The generated reception symbols are input to combining section 301.

At combining section 301, the reception symbols input from demodulation section 107 and the reception symbols input from demodulation section 207 are combined, and combined symbols are decoded at decoding section 302. Reception data is thus obtained.

Meanwhile, transmission data is coded in coding section 401, modulated in modulation section 402, subjected to predetermined radio processing such as upconverting and the like, and then, input to transmission antenna selecting section 404 as an uplink signal.

Transmission antenna selecting section 404 selects one of antenna 1 and antenna 2 as a transmission antenna to transmit the uplink signal to base station 1. When $|p_{21}|<|p_{22}|$, transmission antenna selecting section 404 selects antenna 1 as the transmission antenna, and inputs the uplink signal input from radio transmission processing section 403 to transmission/reception switching section 101. Accordingly, when $|p_{21}|<|p_{22}|$, the uplink signal subjected to the radio processing in radio transmission processing section 403 is transmitted to base station 1 from antenna 1. Inversely, when $|p_{21}|\geqq|p_{22}|$, transmission antenna selecting section 404 selects antenna 2 as the transmission antenna, and inputs the uplink signal input from radio transmission processing section 403 to transmission/reception switching section 201.

Accordingly, when $|p_{21}| \geqq |p_{22}|$, the uplink signal subjected to the radio processing in radio transmission processing section 403 is transmitted to base station 1 from antenna 2.

Thus, in this selection, an antenna with lower reception power of a pilot signal transmitted from base station 2 is selected as a transmission antenna of an uplink signal to base station 1. In other words, in this embodiment, since communications are preformed in the TDD scheme, transmission antenna selecting section 404 selects an antenna with a worse state of the propagation path to base station 2 of the adjacent cell as a transmission antenna of an uplink signal. Accordingly, the uplink signal transmitted from the selected antenna like the above is not easier to reach base station 2 of the adjacent cell, i.e. causes lower interference in the adjacent cell. Thus, in this embodiment, transmission antenna selecting section 404 selects an antenna that causes lower interference in the adjacent cell from antenna 1 and antenna 2, as a transmission antenna of an unlink signal.

In addition, for convenience in description, the number of antennas that the mobile station has is two in this embodiment, but three or more antennas may be also used. In this case, transmission antenna selecting section 404 selects an antenna with the lowest reception power of a pilot signal transmitted from base station 2 from among a plurality of antennas that the mobile station has, as a transmission antenna of an uplink signal to base station 1. In other words, transmission antenna selecting section 404 selects an antenna that causes the lowest interference in the adjacent cell from among a plurality of antennas, as a transmission antenna of an uplink signal.

Thus, in this embodiment, an uplink signal is transmitted from an antenna with the worst state of the propagation path to the base station of the adjacent cell from among a plurality of antennas that the mobile station has, interference caused in the adjacent cell can be thus reduced, and as a result, it is possible to increase the communication system capacity.

(Embodiment 2)

This embodiment describes the case that a mobile station performs transmission power control on an uplink signal.

In the above-mentioned embodiment 1, an antenna with the lowest reception power of a pilot signal transmitted from base station 2 of the adjacent cell is selected as a transmission antenna of an uplink signal. In such selection, it is possible to assuredly select an antenna that causes the lowest interference in the adjacent cell as a transmission antenna. However, since a state of the propagation path to base station 1 is not taken into consideration in selection of antenna, it is considered that the uplink signal does not meet required reception quality in base station 1 depending on the state of the propagation path. Therefore, in this embodiment, transmission power control is performed on an uplink signal to meet the required reception quality of the uplink signal in base station 1, while a transmission antenna is selected with a state of the propagation path between each antenna and base station 1 taken into consideration.

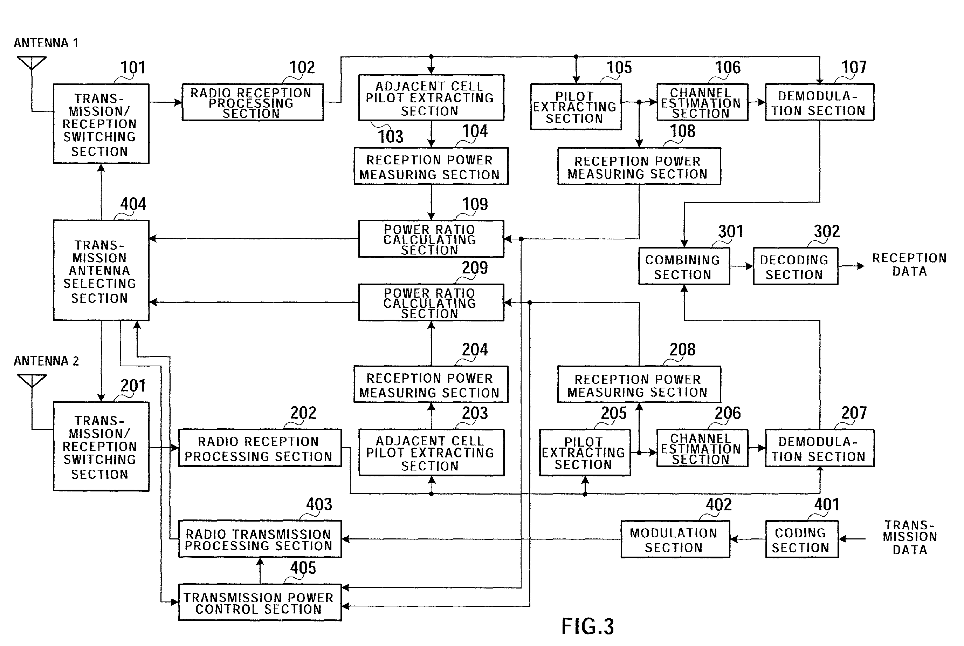

FIG.3 is a block diagram illustrating a configuration of a mobile station according to Embodiment 2 of the present invention. In addition, the same sections as in Embodiment 1 (FIG.2) are assigned the same reference numerals and descriptions thereof will be omitted.

In FIG.3, reception power measuring section 108 and power ratio calculating section 109 are provided in association with antenna 1. A pilot signal $p_{11}$ extracted in pilot extracting section 105 is input to reception power measuring section 108. Reception power measuring section 108 measures reception power $|p_{11}|$ of the pilot signal $p_{11}$, and inputs the measurement result to power ratio calculating section 109 and transmission power control section 405. Further, reception power $|p_{21}|$ measured in reception power measuring section 104 is input to power ratio calculating section 109. Then, power ratio calculating section 109 calculates a ratio of the reception power $|p_{21}|$ to reception power $|p_{11}|$ ($|p_{21}|/|p_{11}|$), and inputs the calculation result to transmission antenna selecting section 404.

Meanwhile, reception power measuring section 208 and power ratio calculating section 209 are provided in association with antenna 2. A pilot signal $p_{12}$ extracted in pilot extracting section 205 is input to reception power measuring section 208. Reception power measuring section 208 measures reception power $|p_{12}|$ of the pilot signal $p_{12}$, and inputs the measurement result to power ratio calculating section 209 and transmission power control section 405. Further, reception power $|p_{22}|$ measured in reception power measuring section 204 is input to power ratio calculating section 209. Then, power ratio calculating section 209 calculates a ratio of the reception power $|p_{22}|$ to reception power $|p_{12}|$ ($|p_{22}|/|p_{12}|$), and inputs the calculation result to transmission antenna selecting section 404.

Transmission antenna selecting section 404 selects one of antenna 1 and antenna 2 as a transmission antenna to transmit an uplink signal to base station 1. When $|p_{21}|/|p_{11}| < |p_{22}|/|p_{12}|$, transmission antenna selecting section 404 selects antenna 1 as the transmission antenna, and inputs an uplink signal input from radio transmission processing section 403 to transmission/reception switching section 101. Accordingly, when $|p_{21}|/|p_{11}| < |p_{22}|/|p_{12}|$, the uplink signal subjected to the radio processing in radio transmission processing section 403 is transmitted to base station 1 from antenna 1. Inversely, when $|p_{21}|/|p_{11}| \geqq |p_{22}|/|p_{12}|$, transmission antenna selecting section 404 selects antenna 2 as the transmission antenna, and inputs an uplink signal input from radio transmission processing section 403 to transmission/reception switching section 201. Accordingly, when $|p_{21}|/|p_{11}| \geqq |p_{22}|/|p_{12}|$, the uplink signal subjected to the radio processing in radio transmission processing section 403 is transmitted to base station 1 from antenna 2. In other words, in this selection, an antenna with a smaller ratio is selected as a transmission antenna of an uplink signal to base station 1, where the ratio is of the reception power of a pilot signal transmitted from base station 2 to the reception power of a pilot signal transmitted from base station 1. The selection result is input to transmission power control section 405. In addition, the reason of such selection will be described later.

Further, when transmission antenna selecting section 404 selects antenna 1, transmission power control section 405 determines transmission power $Pt_1$ of an uplink signal according to the following equation (1), to meet the required reception quality of the uplink signal in base station 1.

$$Pt_1 = \alpha_{11} \times targetSIR \times I_{BTS} \qquad \ldots (1)$$

Here, $\alpha_{11}$ is the amount of attenuation in the propagation path between antenna 1 and base station 1, $I_{BTS}$ is the amount of interference that base station 1 undergoes, and target SIR is target SIR in base station 1. In addition, $I_{BTS}$ and target SIR are notified from base station 1 to the mobile station as control information. Further, since a transmission power value of the pilot signal $p_{11}$ in the base station is also notified from base station 1 to the mobile station as control information, transmission power control section 405 can obtain $\alpha_{11}$ by dividing the notified transmission power value by the reception power $|p_{11}|$.

Meanwhile, when transmission antenna selecting section 404 selects antenna 2, transmission power control section 405 determines transmission power $Pt_2$ of an uplink signal according to the following equation (2), to meet the required reception quality of the uplink signal in base station 1.

$$Pt_2 = \alpha_{12} \times targetSIR \times I_{BTS} \qquad \ldots (2)$$

Here, $\alpha_{12}$ is the amount of attenuation in the propagation path between antenna 2 and base station 1. Since a transmission power value of the pilot signal $p_{12}$ in the base station is also notified from base station 1 to the mobile station as control information, transmission power control section 405 can obtain $\alpha_{12}$ by dividing the notified transmission power value by the reception power $|p_{12}|$.

Transmission power control section 405 controls the transmission power of the uplink signal subjected to the radio processing in radio transmission processing section 403 to be the transmission power value obtained in the above-mentioned equation (1) or (2). Such transmission power control is generally referred to as open-loop transmission power control.

Next, the reason transmission antenna selecting section 404 performs antenna selection as described above will be described.

Required transmission power $Pt_1$ when an uplink signal is transmitted from antenna 1 of the mobile station is as in the above-mentioned equation (1), while required transmission power $Pt_2$ when an uplink signal is transmitted from antenna 2 of the mobile station is as in the above-mentioned equation (2).

Further, interference $It_1$ imposed on base station 2 of the adjacent cell is as in equation (3) when the uplink signal is transmitted from antenna 1 in the transmission power $Pt_1$ of the above-mentioned equation (1). Here, $\alpha_{21}$ represents the amount of attenuation in the propagation path between antenna 1 and base station 2.

$$It_1 = Pt_1 / \alpha_{21} \qquad \ldots (3)$$

The above-mentioned equation (3) results in equation (4) from the above-mentioned equation(1).

$$It_1 = (\alpha_{11} / \alpha_{21}) \times targetSIR \times I_{BTS} \qquad \ldots (4)$$

Meanwhile, interference $It_2$ imposed on base station 2 of the adjacent cell is as in equation (5) when the uplink signal is transmitted from antenna 2 in the transmission power $Pt_2$ of the above-mentioned equation (2) . Here, $\alpha_{22}$ represents the amount of attenuation in the propagation path between antenna 2 and base station 2.

$$It_2 = Pt_2/\alpha_{22} \qquad \ldots(5)$$

The above-mentioned equation (5) results in equation(6) from the above-mentioned equation (2).

$$It_2 = (\alpha_{12}/\alpha_{22}) \times targetSIR \times I_{BTS} \qquad \ldots(6)$$

Here, in this embodiment, as in the above-described Embodiment 1, transmission antenna selecting section 404 selects an antenna that causes lower interference in the adjacent cell from antenna 1 and antenna 2, as a transmission antenna of an uplink signal. In other words, when $It_1 < It_2$, antenna 1 is selected as the transmission antenna. Inversely, when $It_1 \geqq It_2$, antenna 2 is selected as the transmission antenna. In other words, when $(\alpha_{11}/\alpha_{21}) < (\alpha_{12}/\alpha_{22})$, antenna 1 is selected as the transmission antenna. Inversely, when $(\alpha_{11}/\alpha_{21}) \geqq (\alpha_{12}/\alpha_{22})$, antenna 2 is selected as the transmission antenna.

Further, since the amount of attenuation in the propagation path is in inverse proportion to the reception power, by selecting antenna 1 as the transmission antenna 1 when $|p_{21}|/|p_{11}| < |p_{22}|/|p_{12}|$, while selecting antenna 2 as the transmission antenna when $|p_{21}|/|p_{11}| \geqq |p_{22}|/|p_{12}|$, transmission antenna selecting section 404 selects an antenna that causes lower interference in the adjacent cell from antenna 1 and antenna 2 as a transmission antenna of an uplink signal.

Thus, in this embodiment, when an uplink signal is transmitted to base station 1 from the mobile station in the required transmission power $Pt_1$ or $Pt_2$ such that the signal is received in targetSIR in base station 1, an antenna that causes lower interference in base station 2 of the adjacent cell is selected.

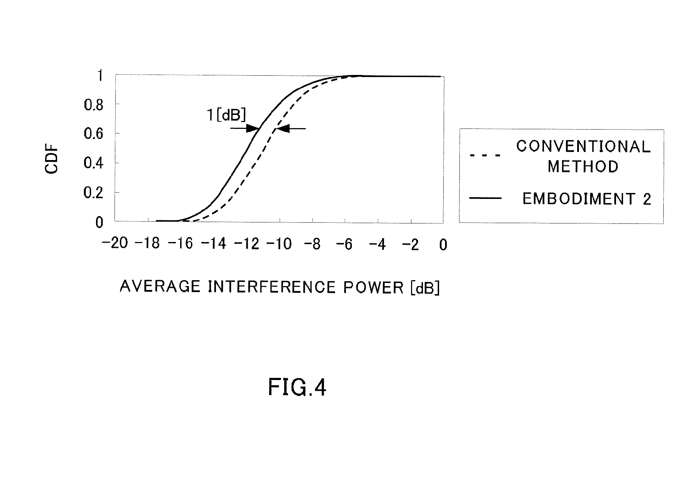

Here, a computer simulation result performed to estimate performance of this embodiment is described. FIG. 4 shows a cumulative distribution function (CDF) of the interference power in base station 2 of the adjacent cell. The average interference power on the horizontal axis is normalized by the maximum value. It is understood from the simulation result that in the method of selecting a transmission antenna according to this embodiment, the interference power can be reduced by 1dB as compared with the conventional selection method (where antenna 1 is selected when $|p_{11}| \geqq |p_{12}|$, while antenna 2 is selected when $|p_{11}| < |p_{12}|$).

In addition, for convenience in description, the number of antennas that the mobile station has is two in this embodiment, but three or more antennas may be also used. In this case, as a transmission antenna of an uplink signal to base station 1, transmission antenna selecting section 404 selects an antenna with the smallest ratio of the reception power of a pilot signal transmitted from base station 2 to the reception power of a pilot signal transmitted from base station 1, from among a plurality of antennas that the mobile station has. In other words, transmission antenna selecting section 404 selects an antenna that causes the lowest interference in the adjacent cell from among a plurality of antennas, as a transmission antenna of an uplink signal.

Thus, in this embodiment, when transmission power control is performed on an uplink signal, since a transmission antenna of the uplink signal is selected based on the reception power ratio of pilot signals as described above, interference caused in the adjacent cell can be reduced, while meeting the required reception quality in the base station that receives the uplink signal. As a result, it is also possible to increase the communication system capacity even when transmission power control is performed on the uplink signal.

(Embodiment 3)

This embodiment describes the case where base station 1 and base station 2 have a plurality of antennas.

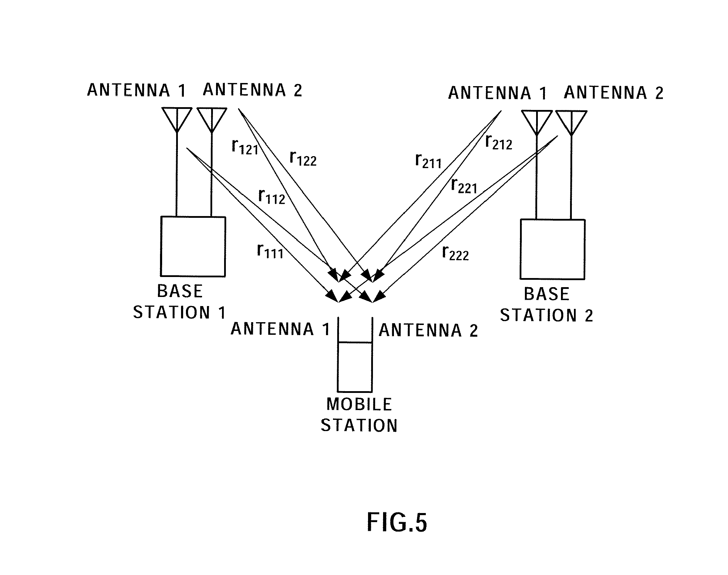

FIG.5 is a configuration diagram of a mobile communication system according to Embodiment 3 of the present invention. This mobile communication system differs from that in Embodiment 1 in the following respects. That is, each of base station 1 and base station 2 has two antennas, and transmits a downlink signal from both antenna 1 and antenna 2 to a mobile station. In FIG.5, $r_{ijk}$ denotes a downlink signal that is transmitted from an antenna j of a base station i and received in an antenna k of a mobile station. For example, $r_{121}$ denotes a downlink signal that is transmitted from antenna 2 of base station 1 and received in antenna 1 of the mobile station.

In the case where a base station thus has a plurality of antennas, it needs to be considered that the base station performs maximum ratio combining on uplink signals of the antennas. In other words, the reception power $|p_{211}|$ and $|p_{12}|$ in Embodiment 1 is respectively replaced with $\sqrt{(|p_{211}|^2+|p_{221}|^2)}$ and $\sqrt{(|p_{212}|^2+|p_{222}|^2)}$. Here, $p_{ijk}$ is a pilot signal contained in a received signal $r_{ijk}$, and $|p_{ijk}|$ is the reception power of the pilot signal $p_{ijk}$.

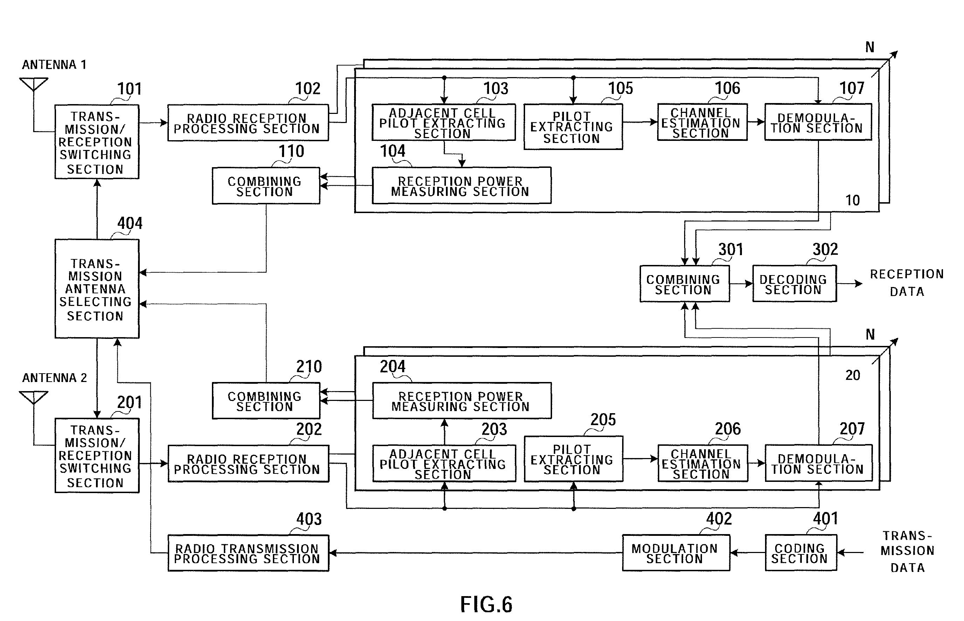

FIG.6 is a block diagram illustrating a configuration of a mobile station according to Embodiment 3 of the present invention. In addition, the same configurations as in Embodiment 1 (FIG.2) are assigned the same reference numerals, and descriptions thereof will be omitted.

In FIG.6, N configurations 10 each with a combination of adjacent cell pilot extracting section 103, reception power measuring section 104, pilot extracting section 105, channel estimation section 106 and demodulation section 107 are provided, where N is the same number as the number of antennas which the base station has. Similarly, N configurations 20 each with a combination of adjacent cell pilot extracting section 203, reception power measuring section 204, pilot extracting section 205, channel estimation section 206 and demodulation section 207 are provided, where N is the same number as the number of antennas which the base station has. Here, as shown in FIG.5, since each of base station 1 and base station 2 has two antennas, N of the mobile station is two.

Adjacent cell pilot extracting section 103 of N=1 extracts a pilot signal $p_{211}$ contained in a received signal $r_{211}$ (i.e. a pilot signal which is transmitted from antenna 1 of base station 2 of the adjacent cell and received in antenna 1 of the mobile station), and inputs the extracted pilot signal $p_{211}$ to reception power measuring section 104 of N=1. Receptionpowermeasuring section 104 of N=1 measures reception power $|p_{211}|$ of the pilot signal $p_{211}$, and inputs the measurement result to combining section 110. Further, adjacent cell pilot extracting section 103 of N=2 extracts a pilot signal $p_{221}$ contained in a received signal $r_{221}$ (i.e. a pilot signal which is transmitted from antenna 2 of base station 2 of the adjacent cell and received in antenna 1 of the mobile station), and inputs the extracted pilot signal $p_{221}$ to reception power measuring section 104 of N=2. Reception power measuring section 104 of N=2 measures reception power $|p_{221}|$ of the pilot signal $p_{221}$, and inputs the measurement result to combining section 110. Combining section 110 obtains combined reception power $\sqrt{\sqrt{(|p_{211}|^2+|p_{221}|^2)}}$ on antenna 1 of the mobile station and inputs to transmission antenna selecting section 404.

Meanwhile, adjacent cell pilot extracting section 203 of N=1 extracts a pilot signal $p_{212}$ contained in a received signal $r_{212}$ (i.e. a pilot signal which is transmitted from antenna 1 of base station 2 of the adjacent cell and received in antenna 2 of the mobile station), and inputs the extracted pilot signal $p_{212}$ to reception power measuring section 204 of N=1. Reception power measuring section 204 of N=1 measures reception power $|p_{212}|$ of the pilot signal $p_{212}$, and inputs the measurement result to combining section 210. Further, adjacent cell pilot extracting section 203 of N=2 extracts a pilot signal $p_{222}$ contained in a received signal $r_{222}$ (i.e. a pilot signal which is transmitted from antenna 2 of base station 2 of the adjacent cell and received in antenna 2 of the mobile station), and inputs the extracted pilot signal $p_{222}$ to reception power measuring section 204 of N=2. Reception power measuring section 204 of N=2 measures reception power $|p_{222}|$ of the pilot signal $p_{222}$, and inputs the measurement result to combining section 210. Combining section 210 obtains combined reception power $\sqrt{(|p_{212}|^2+|p_{222}|^2)}$ on antenna 2 of the mobile station and inputs to transmission antenna selecting section 404.

Transmission antenna selecting section 404 selects one of antenna 1 and antenna 2 as a transmission antenna to transmit an uplink signal to base station 1. When $\sqrt{(|p_{211}|^2+|p_{221}|^2)}<\sqrt{(|p_{212}|^2+|p_{222}|^2)}$, transmission antenna selecting section 404 selects antenna 1 as the transmission antenna, and inputs the uplink signal input from radio transmission processing section 403 to transmission/reception switching section 101. Accordingly, when $\sqrt{(|p_{211}|^2+|p_{221}|^2)}<\sqrt{(|p_{212}|^2+|p_{222}|^2)}$. the uplink signal subjected to the radio processing in radio transmission processing section 403 is transmitted to base station 1 from antenna 1. Inversely, when $\sqrt{(|p_{211}|^2+|p_{221}|^2)}\geqq\sqrt{(|p_{212}|^2+|p_{222}|^2)}$ transmission antenna selecting section 404 selects antenna 2 as the transmission antenna, and inputs the uplink signal input from radio transmission processing section 403 to transmission/reception switching section 201. Accordingly, when $\sqrt{(|p_{211}|^2+|p_{221}|^2)}\geqq\sqrt{(|p_{212}|^2+|p_{222}|^2)}$, the uplink signal subjected to the radio processing in radio transmission processing section 403 is transmitted to base station 1 from antenna 2.

Thus, in this selection, an antenna with lower combined reception power of pilot signals transmitted from a plurality of antennas of base station 2 is selected as a transmission antenna of an uplink signal to base station 1. As in the above-mentioned Embodiment 1, the uplink signal transmitted from the thus selected antenna causes lower interference in the adjacent cell. Thus, in this embodiment, transmission antenna selecting section 404 selects an antenna that causes lower interference in the adjacent cell from antenna 1 and antenna 2, as a transmission antenna of an uplink signal.

In addition, to simplify calculation in the mobile station, calculation may be performed while approximating $\sqrt{(|p_{211}|^2+|p_{221}|^2)}$ at $|p_{211}|+|p_{221}|$, and $\sqrt{(|p_{212}|^2+|p_{222}|^2)}$ at $|p_{212}|^2+|p_{222}|^2$.

Further, for convenience in description, the number of antennas that the mobile station has is two in this embodiment, but three or more antennas may be also used. In this case, as in the foregoing, transmission antenna selecting section 404 selects an antenna with the lowest combined reception power of pilot signals transmitted from a plurality of antennas of base station 2 from among a plurality of antennas that the mobile station has, as a transmission antenna of an uplink signal to base station 1. In other words, transmission antenna selecting section 404 selects an antenna that causes the lowest interference in the adjacent cell from among a plurality of antennas, as a transmission antenna of an uplink signal.

Thus, in this embodiment, since a transmission antenna is selected based on the combined reception power in each antenna of the mobile station, even when the base station has a plurality of antennas and performs maximum ratio combining on uplink signals of the antennas, it is possible to reduce interference caused in the adjacent cell, and as a result, the communication system capacity can be increased.

(Embodiment 4)

This embodiment describes the case where base station 1 and base station 2 have a plurality of antennas as in Embodiment 3, and transmission power control is performed on uplink signals as in Embodiment 2.

A configuration of a mobile communication system according to this embodiment is the same as in FIG.5. Accordingly, it also needs to be considered that the base station performs maximum ratio combining on uplink signals of the antennas. In other words, the reception power $|p_{21}|$, $|p_{22}|$, $|p_{11}|$ and $|p_{12}|$ in Embodiment 2 is respectively replaced with $\sqrt{(|p_{211}|^2+|p_{221}|^2)}$, $\sqrt{(|p_{212}|^2+|p_{222}|^2)}$, $\sqrt{(|p_{111}|^2+|p_{121}|^2)}$ and $\sqrt{(|p_{112}|^2+|p_{122}|^2)}$.

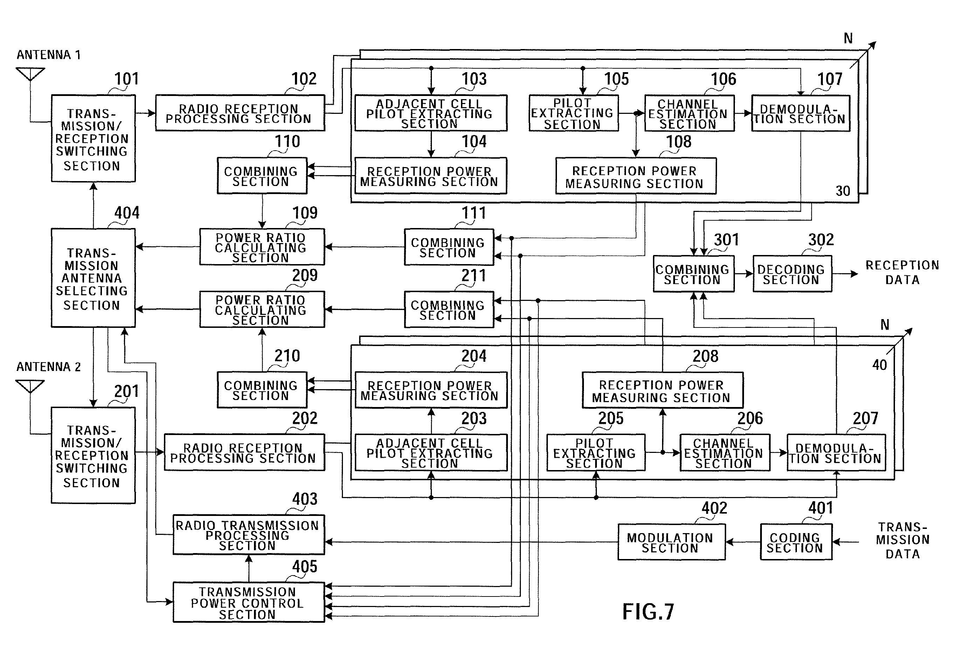

FIG.7 is a block diagram illustrating a configuration of a mobile station according to Embodiment 4 of the invention. In addition, the same configurations as in Embodiment 2 (FIG.3) or Embodiment 3 (FIG.6) are assigned the same reference numerals, and descriptions thereof will be omitted.

In FIG.7, provided are N configurations 30 each with a combination of adjacent cell pilot extracting section 103, reception power measuring section 104, pilot extracting section 105, channel estimation section 106 and demodulation section 107, where N is the same number as the number of antennas which the base station has. Similarly, provided are N configurations 40 each with a combination of adjacent cell pilot extracting section 203, reception power measuring section 204, pilot extracting section 205, channel estimation section 206 and demodulation section 207, where N is the same number as the number of antennas which the base station has. Here, as shown in FIG.5, since each of base station 1 and base station 2 has two antennas, N of the mobile station is two.

Pilot extracting section 105 of N=1 extracts a pilot signal $p_{111}$ contained in a received signal $r_{111}$ (i.e. a pilot signal which is transmitted from antenna 1 of base station 1 and received in antenna 1 of the mobile station), and inputs the extracted pilot signal $p_{111}$ to reception power measuring section 108 of N=1. Reception power measuring section 108 of N=1 measures reception power $|p_{111}|$ of the pilot signal $p_{111}$, and inputs the measurement result to combining section 111 and transmission power control section 405. Further, pilot extracting section 105 of N=2 extracts a pilot signal $P_{121}$ contained in a received signal $r_{121}$ (i.e. a pilot signal which is transmitted from antenna 2 of base station 1 and received in antenna 1 of the mobile station), and inputs the extracted pilot signal $p_{121}$ to reception power measuring section 108 of N=2. Receptionpowermeasuring section 108 of N=2 measures reception power $|p_{121}|$ of the pilot signal $p_{121}$, and inputs the measurement result to combining section 111 and transmission power control section 405. Combining section 111 obtains combined reception power $\sqrt{(|p_{111}|^2+|p_{121}|^2)}$ on antenna 1 of the mobile station, and inputs to transmission ratio calculating section 109. Further, $\sqrt{(|p_{211}|^2+|p_{221}|^2)}$ obtained in combining section 110 is also input to power ratio calculating section 109. Power ratio calculating section 109 calculates a ratio $(\sqrt{(|p_{211}|^2+|p_{221}|^2)}/\sqrt{(|p_{111}|^2+|p_{121}|^2)})$ of the combined reception power $\sqrt{(|p_{211}|^2+|p_{221}|^2)}$ to the combined reception power $\sqrt{(|p_{111}|^2+|p_{121}|^2)}$, and inputs the measurement result to transmission antenna selecting section 404.

Meanwhile, pilot extracting section 205 of N=1 extracts a pilot signal $p_{112}$ contained in a received signal $r_{112}$ (i.e. a pilot signal which is transmitted from antenna 1 of base station 1 and received in antenna 2 of the mobile station), and inputs the extracted pilot signal $p_{112}$ to reception power measuring section 208 of N=1. Reception power measuring section 208 of N=1 measures reception power $|p_{112}|$ of the pilot signal $p_{112}$, and inputs the measurement result to combining section 211 and transmission power control section 405. Further, pilot extracting section 205 of N=2 extracts a pilot signal $p_{122}$ contained in a received signal $r_{122}$ (i.e. a pilot signal which is transmitted from antenna 2 of base station 1 and received in antenna 2 of the mobile station), and inputs the extracted pilot signal $p_{122}$ to reception power measuring section 208 of N=2. Receptionpowermeasuring section 208 of N=2 measures reception power $|p_{122}|$ of the pilot signal $p_{122}$, and inputs the measurement result to combining section 211 and transmission power control section 405. Combining section 211 obtains combined reception power $\sqrt{(|p_{112}|^2+|p_{122}|^2)}$ on antenna 2 of the mobile station, and inputs to transmission ratio calculating section 209. Further, $\sqrt{(|p_{212}|^2+|p_{222}|^2)}$ obtained in combining section 210 is also input to power ratio calculating section 209. Power ratio calculating section 209 calculates a ratio $(\sqrt{(|p_{212}|^2+|p_{222}|^2)}/\sqrt{(|p_{112}|^2+|p_{122}|^2)})$ of the combined reception power $\sqrt{(|p_{212}|^2+|p_{222}|^2)}$ to the combined reception power $\sqrt{(|p_{112}|^2+|p_{122}|^2)}$, and inputs the measurement result to transmission antenna selecting section 404.

Transmission antenna selecting section 404 selects one of antenna 1 and antenna 2 as a transmission antenna to transmit an uplink signal to base station 1. When $\sqrt{(|p_{211}|^2+|p_{221}|^2}/\sqrt{(|p_{111}|^2+|p_{121}|^2)})<\sqrt{(|p212|^2+|p_{222}|^2)}/\sqrt{(|p_{112}|^2+|p_{122}|^2)}$, transmission antenna selecting section 404 selects antenna 1 as the transmission antenna, and inputs the uplink signal input from radio transmission processing section 403 to transmission/reception switching section 101. Accordingly, when $\sqrt{(|p_{211}|^2+|p_{211}|^2}/\sqrt{(|p_{111}|^2+|p_{121}|^2)})<\sqrt{(|p_{111}|^2+|p_{222}|^2)}/\sqrt{(|p_{11}|^2+|p_{122}|^2)}$, the uplink signal subjected to the radio processing in radio transmission processing section 403 is transmitted to base station 1 from antenna 1. Inversely, when $\sqrt{(|p_{211}|^2+|p_{221}|^2}/\sqrt{(|p_{111}|^2+|p_{121}|^2)})\geqq\sqrt{(|p_{212}|^2+|p_{222}|^2)}/\sqrt{(|p_{112}|^2+|p_{122}|^2)}$, transmission antenna selecting section 404 selects antenna 2 as the transmission antenna, and inputs the uplink signal input from radio transmission processing section 403 to transmission/reception switching section 201. Accordingly, when $\sqrt{(|p_{211}|^2+|p_{221}|^2}/\sqrt{(|p_{111}|^2+|p_{121}|^2)})\geqq\sqrt{(|p_{212}|^2+|p_{222}|^2)}/\sqrt{(|p_{112}|^2+|p_{122}|^2)}$, the uplink signal subjected to the radio processing in radio transmission processing section 403 is transmitted to base station 1 from antenna 2. The selection result is input to transmission power selecting section 405.

When transmission antenna selecting section 404 selects antenna 1, transmission power control section 405 determines transmission power $Pt_1$ of the uplink signal according to the following equation (7), to meet the required reception quality of the uplink signal in base station 1. Here, it is considered that uplink signals of two antennas are combined in base station 1.

$$Pt_1 = 1 / \{ (1/\alpha_{111}) + (1/\alpha_{121}) \} \times targetSIR \times I_{BTS}$$

$$\ldots (7)$$

Here, $\alpha_{111}$ is the amount of attenuation in the propagation path between antenna 1 of the mobile station and antenna 1 of base station 1, $\alpha_{121}$ is the amount of attenuation in the propagation path between antenna 1 of the mobile station and antenna 2 of base station 1, $I_{BTS}$ is the amount of interference that base station 1 undergoes, and targetSIR is target SIR in base station 1. In addition, $I_{BTS}$ and targetSIR is notified from base station 1 to the mobile station as control information. Further, transmission power values of the pilot signals $p_{111}$ and $p_{121}$ in the base station are also notified from base station 1 to the mobile station as control information, and therefore, transmission power control section 405 can obtain $\alpha_{111}$ and $\alpha_{121}$ respectively by dividing the notified transmission power value by the reception power $|p_{111}|$ or $|p_{121}|$.

Meanwhile, when transmission antenna selecting section 404 selects antenna 2, transmission power control section 405 determines transmission power $Pt_2$ of the uplink signal according to the following equation (8), to meet the required reception quality of the uplink signal in base station 1. Here, it is considered that uplink signals of two antennas are combined in base station 1.

$$Pt_2 = 1 / \{ (1/\alpha_{112}) + (1/\alpha_{122}) \} \times targetSIR \times I_{BTS}$$

$$\ldots (8)$$

Here, $\alpha_{112}$ is the amount of attenuation in the propagation path between antenna 2 of the mobile station and antenna 1 of base station 1, and $\alpha_{122}$ is the amount of attenuation in the propagation path between antenna 2 of the mobile station and antenna 2 of base station 1. Since transmission power values of the pilot signals $p_{112}$ and $p_{122}$ in the base station are also notified from base station 1 to the mobile station as control information, transmission power control section 405 can obtain $\alpha_{112}$ and $\alpha_{122}$ respectively by dividing the notified transmission power value by the reception power $|p_{112}|$ or $|p_{122}|$.

In addition, to simplify calculation in the mobile station, calculation may be performed while approximating $\sqrt{(|p_{211}|^2 + |p_{221}|^2)}$ at $|p_{211}| + |p_{221}|$, $\sqrt{(|p_{212}|^2 + |p_{222}|^2)}$ at $|p_{212}|^2 + |p_{222}|^2$, $\sqrt{(|p_{111}|^2 + |p_{121}|^2)}$ at $|p_{111}| + |p_{121}|$, and $\sqrt{(|p_{112}|^2 + |p_{122}|^2)}$ at $|p_{112}|^2 + |p_{122}|^2$.

Further, for convenience in description, the number of antennas that the mobile station has is two in this embodiment, but three or more antennas may be also used. In this case, as in the foregoing, transmission antenna selecting section 404 selects an antenna with the smallest ratio of combined reception power of pilot signals from a plurality of antennas that the mobile station has, as a transmission antenna of an uplink signal to base station 1. In other words, transmission antenna selecting section 404 selects an antenna that causes the lowest interference in the adjacent cell from among a plurality of antennas, as a transmission antenna of an uplink signal.

Thus, in this embodiment, when transmissionpower control is performed on uplink signals, a transmission antenna is selected based on a ratio of the combined reception power in each antenna of the mobile station. Therefore, even when the base station has a plurality of antennas and performs maximum ratio combining on uplink signals of the antennas, interference caused in the adjacent cell can be reduced, while meeting the required reception quality in the base station that receives the uplink signal. As a result, it is also possible to increase the communication system capacity when transmission power control is performed on the uplink signal.

(Embodiment 5)

This embodiment describes the case where a mobile station performs adaptive modulation and coding.

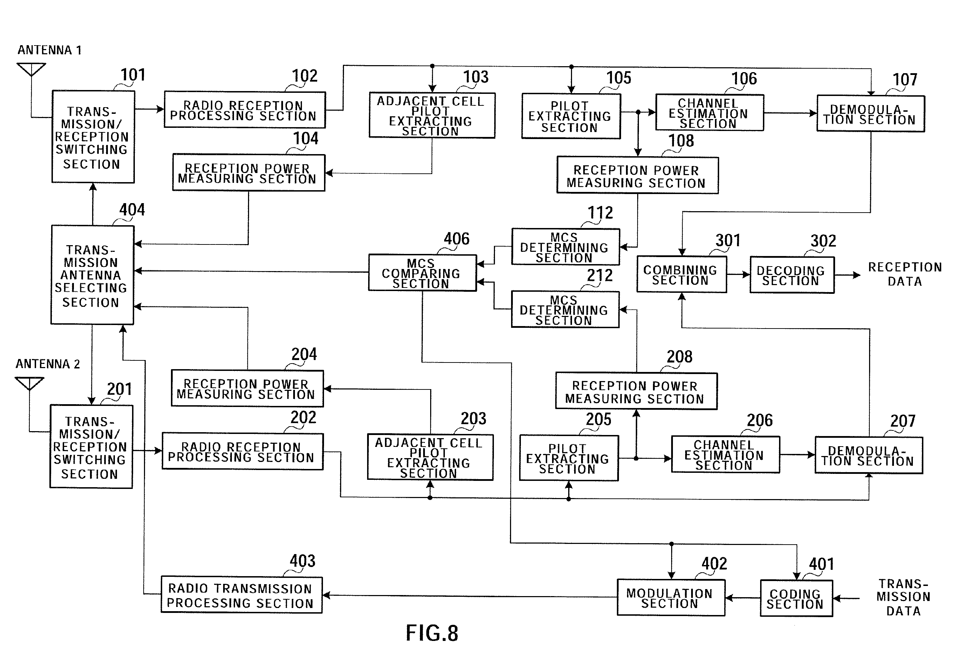

FIG.8 is a block diagram illustrating a configuration of a mobile station according to Embodiment 5 of the present invention. In addition, the same configurations as in Embodiment 1 (FIG.2) or Embodiment 2 (FIG.3) are assigned the same reference numerals, and descriptions thereof will be omitted.

The reception power $|p_{11}|$ measured in reception power measuring section 108 is input to MCS determining section 112. Further, the reception power $|p_{12}|$ measured in reception power measuring section 208 is input to MCS determining section 212.

Based on the reception power $|p_{11}|$, MCS determining section 112 determines a usable MCS (Modulation Coding Scheme) level when an uplink signal is transmitted from antenna 1. Further, based on the reception power $|p_{12}|$, MCS determining section 212 determines a usable MCS level when an uplink signal is transmitted from antenna 2. Determination of the MCS level is made as follows.

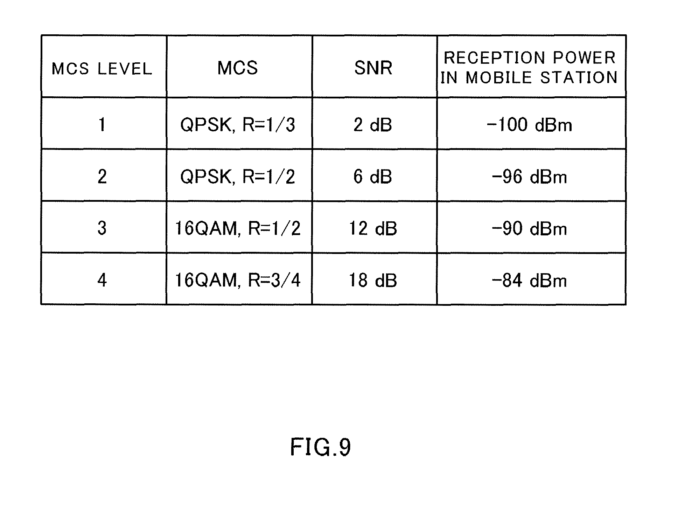

FIG.9 is a table showing a correspondence between the MCS level and reception power. In the table, a plurality of modulation coding schemes indicated by a plurality of MCS levels are prepared in association with the reception power. Further, in this table, as the MCS level increases, the modulation coding scheme has a higher transmission rate. Referring to the table, MCS determining sections 112 and 212 determine usable MCS levels for each antenna. Generally, the SNR level in the base station is used in determination of MCS in the mobile station. In the TDD scheme, since the uplink signal and downlink signal have the same propagation path, and have almost same propagation path characteristics, in this embodiment, the determination is made using the reception power $|p_{11}|$ and $|p_{12}|$ in the mobile station. In other words, this embodiment uses that the reception SNR level in the base station is in a proportional relationship with the reception power level in the mobile station. More specifically, MCS determining section 112 determines MCS level=1 (modulation scheme: QPSK, coding rate R=1/3) as a usable MCS level when the reception power $|p_{11}|$ is less than -100dBm, MCS level=2 (modulation scheme: QPSK, coding rate R=1/2) as a usable MCS level when the reception power $|p_{11}|$ is -100dBm or more and less than -96dBm, MCS level=3 (modulation scheme: 16QAM, coding rate R=1/2) as a usable MCS level when the reception power $|p_{11}|$ is-96dBmormoreandlessthan-90dBm, andMCS level=4 (modulation scheme: 16QAM, coding rate R=3/4) as a usable MCS level when the reception power $|p_{11}|$ is -90dBm or more and less than -84dBm. Determination in MCS determining section 212 is also made as in MCS determining section 112 based on the reception power $|p_{12}|$. Respective determination results in MCS determining sections 112 and 212 are both input to MCS comparing section 406.

MCS comparing section 406 compares the MCS level (MCS level usable in antenna 1) determined in MCS determining section 112 with the MCS level (MCS level usable in antenna 2) determined in MCS determining section 212. In other words, MCS levels are compared between the antennas.

Then, when the MCS level usable in antenna 1 differs from the MCS level usable in antenna 2, in order to obtain maximum throughput, MCS comparing section 406 selects a higher MCS level, while instructing transmission antenna selecting section 404 to select an antenna with the higher MCS level. For example, MCS comparing section 406 inputs "1" to transmission antenna selecting section 404 in instructing to select antenna 1, while inputting "2" to transmission antenna selecting section 404 in instructing to select antenna 2. In accordance with this instruction, transmission antenna selecting section 404 selects an antenna with a higher MCS level from antenna 1 and antenna 2, as a transmission antenna of an uplink signal. Further, MCS comparing section 406 outputs the selected MCS level to coding section 401 and modulation section 402. Coding section 401 and modulation section 402 perform coding and modulation with a coding rate and modulation scheme corresponding to the MCS level output from MCS comparing section 406, respectively.

Meanwhile, when the MCS level usable in antenna 1 is the same as the MCS level usable in antenna 2, since the same throughput is obtained when an uplink signal is transmitted from either of the antennas, MCS comparing section 406 instructs transmission antenna selecting section 404 to select an antenna that causes lower interference in the adjacent cell as a transmission antenna of the uplink signal. When MCS levels are the same as each other, for example, MCS comparing section 406 inputs "0" to transmission antenna selecting section 404. In accordance with this instruction, transmission antenna selecting section 404 selects the antenna that causes lower interference in the adjacent cell from antenna 1 and antenna 2, as a transmission antenna of the uplink signal. A method of selecting a transmission antenna in this case is the same as in the above-mentioned Embodiment 1. MCS comparing section 406 outputs the MCS level to coding section 401 and modulation section 402. Coding section 401 and modulation section 402 perform coding and modulation with a coding rate and modulation scheme corresponding to the MCS level output from MCS comparing section 406, respectively.

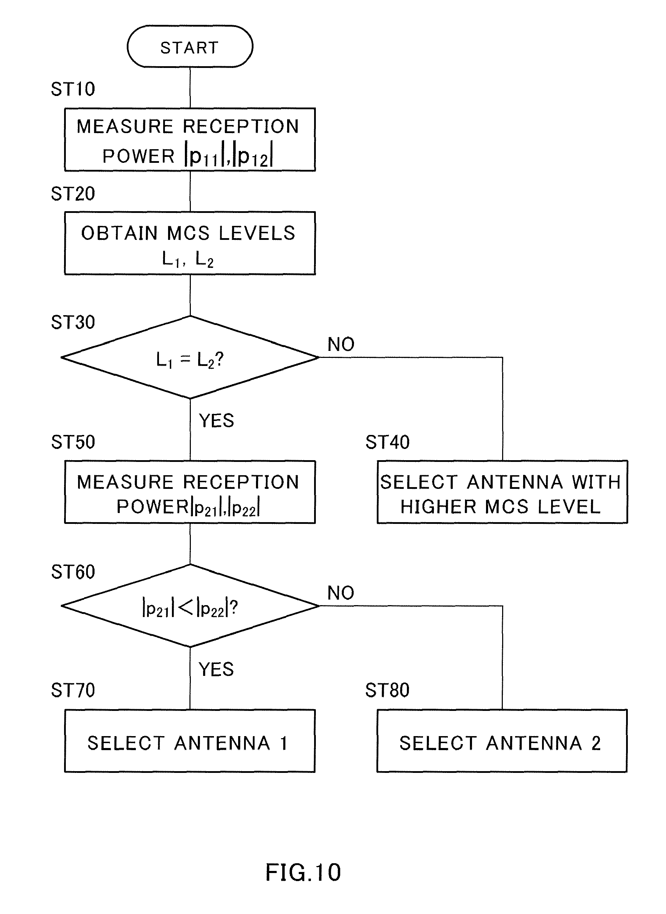

The above-mentioned operation is described below using a flowchart. FIG.10 is the flowchart illustrating the operation of the mobile station according to Embodiment 5 of the present invention.

In FIG.10, first, in ST(step)10, the reception power $|p_{11}|$ and $|p_{12}|$ is measured. Next, in ST20, a MCS level $L_1$ is determined in accordance with the reception power $|p_{11}|$, and a MCS level $L_2$ is determined in accordance with the reception power $|p_{12}|$. In ST30, the MCS level $L_1$ is compared with the MCS level $L_2$. When $L_1 \neq L_2$ (ST30: NO), inST40, an antenna with a higher MCS level is selected as a transmission antenna. Meanwhile, when $L_1 = L_2$ (ST30: YES), in ST50, the reception power $|p_{21}|$ and $|p_{22}|$ is measured, and in ST60, the reception power $|p_{21}|$ and $|p_{22}|$ is compared. Then, when $|p_{21}| < |p_{22}|$ (ST60: YES), in ST70, antenna 1 is selected as a transmission antenna, while when $|p_{21}| \geqq |p_{22}|$ (ST60: NO), in ST80, antenna 2 is selected as a transmission antenna.

Thus, in this embodiment, when usable MCS levels (modulation coding schemes) are different among a plurality of antennas, an antenna with the highest MCS level is transmitted as a transmission antenna. Meanwhile, when usable MCS levels are the same among a plurality of antennas, an antenna that causes the lowest interference in the adjacent cell is selected as a transmission antenna. It is thereby possible to reduce interference caused in the adjacent cell without decreasing throughput, and as a result, the communication system capacity can be increased.

(Embodiment 6)

When a mobile station is located in the vicinity of base station 1 (near the center of the cell of base station 1), interference caused in the adjacent cell is originally low. Inversely, when a mobile station is located near the cell boundary, interference caused in the adjacent cell is high. Therefore, in this embodiment, an antenna with the best state of the propagation path with base station 1 is selected as a transmission antenna when the mobile station is located in the vicinity of base station 1, while an antenna that causes the lowest interference in the adjacent cell is selected as a transmission antenna when the mobile station is located near the cell boundary.

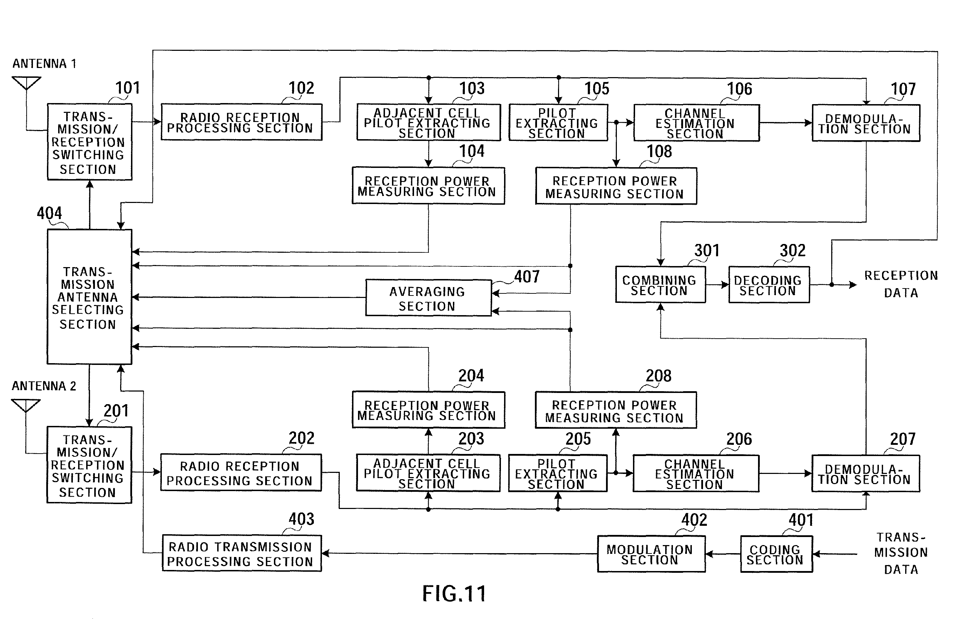

FIG.11 is a block diagram illustrating a configuration of a mobile station according to Embodiment 6 of the present invention. In addition, the same configurations as in Embodiment 1 (FIG.2) or Embodiment 2 (FIG.3) are assigned the same reference numerals, and descriptions thereof will be omitted.

The reception power $|p_{11}|$ measured in reception power measuring section 108 and the reception power $|p_{12}|$ measured in reception power measuring section 208 is input to averaging section 407 and transmission antenna selecting section 404. Averaging section 407 obtains an average value of the reception power $|p_{11}|$ and the reception power $|p_{12}|$, and further, obtains an average value of a long term of the average value. In other words, the averaging section 407 obtains a long-term average of the reception power of the pilot signal. The obtained long-term average is input to transmission antenna selecting section 404. Since $p_{11}$ and $p_{12}$ are pilot signals both transmitted from base station 1, it is possible to estimate a distance between base station 1 and the mobile station from the reception power. In other words, when the distance is longer, since propagation-path attenuation is larger, the reception becomes low.

Hence, transmission antenna selecting section 404 compares the long-term average of the reception power with a threshold. Then, when the long-term average of the reception power is more than or equal to a threshold (i.e. the distance between base station 1 and the mobile station is less than a threshold), transmission antenna selecting section 404 determines that the mobile station is located near the center of the cell of base station and causes low interference in the adjacent cell, and selects an antenna with a better state of the propagation path with base station 1 from antenna 1 and antenna 2, as a transmission antenna of an uplink. More specifically, transmission antenna selecting section 404 selects antenna 1 when $|p_{11}|\geqq|p_{12}|$, while selecting antenna 2 when $|p_{11}|<|p_{12}|$.

Meanwhile, when the long-term average of the reception power is less than the threshold (i.e. the distance between base station 1 and the mobile station is a threshold or more), transmission antenna selecting section 404 determines that the mobile station is located near the cell boundary and causes large interference in the adjacent cell, and selects an antenna that causes lower interference in base station 2 of the adjacent cell from antenna 1 and antenna 2, as a transmission antenna of an uplink signal. The specific selection method is as described in Embodiment 1.

Here, the threshold used in transmission antenna selecting section 404 is notified from base station 1 as part of reception data, and input to transmission antenna selecting section 404. In determining the threshold, for example, base station 1 considers the permitted amount of interference in the adjacent cell, the number of mobile stations held in the adjacent cell and the like. More specifically, the base station increases the threshold of the reception power as the permitted amount of interference in the adjacent cell is smaller, and further, increases the threshold of the reception power as the number of mobile stations held in the adjacent cell is larger.

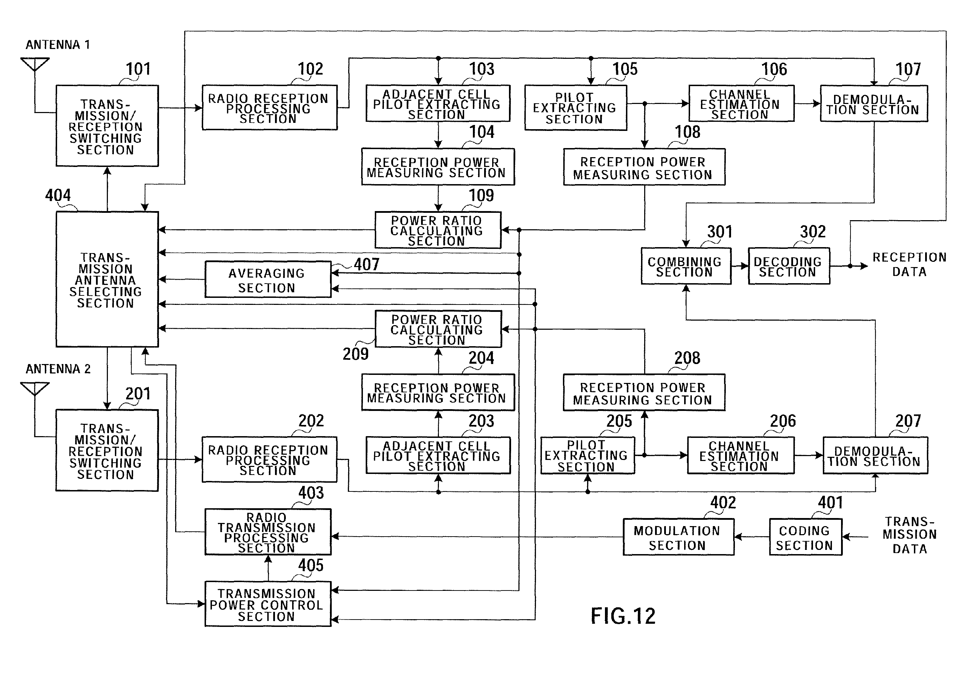

In addition, when the mobile station performs transmission power control on uplink signals, the configuration is as described below. FIG.12 is a block diagram illustrating another configuration of the mobile station according to Embodiment 6 of the invention. In addition, the same sections as in Embodiment 1 (FIG.2) or Embodiment 2 (FIG.3) are assigned the same reference numerals, and descriptions thereof will be omitted.

Further, the operation of averaging section 407 in FIG.12 is the same as in FIG.11.

When the long-term average of the reception power is more than or equal to a threshold (i.e. the distance between base station 1 and the mobile station is less than a threshold), transmission antenna selecting section 404 in FIG.12 selects an antenna with a better state of the propagation path with the base station 1 from antenna 1 and antenna 2, as a transmission antenna of an uplink. More specifically, transmission antenna selecting section 404 selects antenna 1 when $|p_{11}|\geqq|p_{12}|$, while selecting antenna 2 when $|p_{11}|<|p_{12}|$.

Meanwhile, when the long-term average of the reception power is less than the threshold (i.e. the distance between base station 1 and the mobile station is a threshold or more), transmission antenna selecting section 404 selects an antenna that causes lower interference in base station 2 of the adjacent cell from antenna 1 and antenna 2, as a transmission antenna of an uplink signal. The specific selection method is as described in Embodiment 2.

Thus, according to this embodiment, since the antenna selection method is varied corresponding to the distance between the mobile station and the base station, a mobile station judged to cause high interference in the adjacent selects an antenna that causes the lowest interference in the adjacent cell as a transmission antenna, while a mobile station judged to cause low interference in the adjacent cell is able to select an antenna with the best state of the propagation path as a transmission antenna, and it is thereby possible to perform antenna selection diversity with high efficiency in the entire communication system.

In addition, the above-mentioned embodiments describe the mobile communication system including two base stations, base station 1 and base station 2, as an example, but the invention is applicable to a mobile communication system including three or more base stations. When three or more base stations are included, one of the base stations in the other cells is selected as a target base station for interference reduction, and the same processing as in the foregoing may be performed with the selected base station assumed as base station 2 in the above-mentioned embodiments. As a method of selecting a base station, for example, considered are (1) a method of selecting a base station in which the mobile station causes the highest interference, i.e. a base station that provides the highest reception power in the mobile station in the TDD scheme, (2) a method of selecting a base station that causes the highest interference, (3) a method of selecting a base station with the largest capacity rate (the number of held users/the maximum number of allowable users), and the like. In this case, the base station (base station 1) in current communication receives reports of information of status of interference and the capacity rate from adjacent base stations, and based on the information, selects a target base station for interference reduction. The base station in current communication notifies the mobile station of the selected target base station for interference reduction.

Each of functional blocks used in descriptions of each of above-mentioned embodiments is implemented typically as an LSI that is an integrated circuit. Each of the blocks may be configured in one-chip form, or one chip may include part or all of the blocks.

Here, the LSI is assumed, but the circuit may be referred to as an IC, system LSI, super LSI, ultra LSI or the like corresponding to the degree of integration.

Further, the method of integrating circuits is not limited to the LSI, and may be achieved by a dedicated circuit or general processor. It may be possible to use FPGA (Field Programmable Gate Array) enabling programming after manufacturing the LSI, a reconfigurable processor enabling reconfiguration of connection or setting in the circuit cell inside the LSI, or the like.

Furthermore, if technique appears for integrating circuits substituting for the LST with progress in semiconductor technique or another derived technique, the functional blocks will naturally be integrated using such technique. Adaptation of biotechnology and the like may have the potential.

The present application is based on Japanese Patent Application No.2004-051587 filed on February 26 2004, entire content of which is expressly incorporated by reference herein.

Industrial Applicability

The present invention is suitable for a radio communication mobile station apparatus and the like used in a mobile communication system.

**Claims**

1. A mobile station apparatus comprising:

   a plurality of antennas that receives both a signal transmitted from a first base station and another signal transmitted from a second base station of an adjacent cell that is adjacent to a cell of the first base station;
   a selecting section that selects an antenna that causes lowest interference in the adjacent cell from among the plurality of antennas; and
   a transmission section that transmits a signal to the first base station from the selected antenna.

2. The mobile station apparatus according to claim 1,
   wherein the selecting section selects the antenna that causes the lowest interference in the adjacent cell from among the plurality of antennas that the mobile station has when a distance between the mobile station and the first base station is more than or equal to a threshold.

3. The mobile station apparatus according to claim 1, further comprising:

   a measuring section that measures reception power of the signal transmitted from the first base station for each of the plurality of antennas that the mobile station has; and
   a determining section that, for each of the plurality of antennas that the mobile station has, determines a usable modulation coding scheme from a plurality of beforehand prepared modulation coding schemes in accordance with the measured reception power,
wherein the selecting section selects the antenna that causes the lowest interference in the adjacent cell from among the plurality of antennas that the mobile station has when the usable modulation coding schemes are the same in the plurality of antennas that the mobile station has.

4. The mobile station apparatus according to claim 1, further comprising:

a measuring section that measures reception power of the signal transmitted from the second base station for each of the plurality of antennas that the mobile station has,
wherein as the antenna that causes the lowest interference in the adjacent cell, the selecting section selects an antenna with the lowest reception power measured in the measuring section from among the plurality of antennas that the mobile station has.

5. The mobile station apparatus according to claim 1, further comprising:

a measuring section that measures reception power of signals transmitted from a plurality of antennas that the second base station has, for each of the plurality of antennas that the mobile station has and for each of a plurality of antennas that the second base station has; and
a combining section that combines the measured reception power for each of the plurality of antennas that the mobile station has to obtain combined reception power,
wherein as the antenna that causes the lowest interference in the adjacent cell, the selecting section selects an antenna with the lowest combined reception power from among the plurality of antennas that the mobile station has.

6. The mobile station apparatus according to claim 1, further comprising:

a first measuring section that measures reception power of the signal transmitted from the first base station for each of the plurality of antennas that the mobile station has; and
a second measuring section that measures reception power of the signal transmitted from the second base station for each of the plurality of antennas that the mobile station has; and
a calculating section that calculates a ratio of the reception power measured in the second measuring section to the reception power measured in the first measuring section for each of the plurality of antennas that the mobile station has,
wherein as the antenna that causes the lowest interference in the adjacent cell, the selecting section selects an antenna with the smallest ratio calculated in the calculating section from among the plurality of antennas that the mobile station has.

7. The mobile station apparatus according to claim 1, further comprising:

a first measuring section that measures reception power of signals transmitted from a plurality of antennas that the first base station has, for each of the plurality of antennas that the mobile station has and for each of a plurality of antennas that the first base station has;
a second measuring section that measures reception power of signals transmitted from a plurality of antennas that the second base station has, for each of the plurality of antennas that the mobile station has and for each of a plurality of antennas that the second base station has;
a combining section that combines the reception power measured in the first measuring section and the reception power measured in the second measuring section for each of the plurality of antennas that the mobile station has and for each base station to obtain combined reception power; and
a calculating section that calculates a ratio of the combined reception power on the second base station to the combined reception power on the first base station for each of the plurality of antennas that the mobile station has,
wherein as the antenna that causes the lowest interference in the adjacent cell, the selecting section selects an antenna with the smallest ratio calculated in the calculating section from among the plurality of antennas that the mobile station has.

8. A method of selecting a transmission antenna in a mobile station apparatus having a plurality of antennas,
wherein an antenna that causes lowest interference in an adjacent cell is selected from among the plurality of antennas as a transmission antenna, the adjacent cell is adjacent to a cell of a base station to which the mobile station apparatus transmits a signal.

BASE STATION 2

ANTENNA 2

$r_{22}$

$r_{21}$

MOBILE STATION

$r_{12}$

ANTENNA 1

$r_{11}$

BASE STATION 1

FIG.1

FIG.2

FIG.3

FIG.4

FIG.5

FIG.6

ANTENNA 1

TRANS-MISSION/RECEPTION SWITCHING SECTION 101

RADIO RECEPTION PROCESSING SECTION 102

COMBINING SECTION 110

ADJACENT CELL PILOT EXTRACTING SECTION 103

RECEPTION POWER MEASURING SECTION 104

PILOT EXTRACTING SECTION 105

CHANNEL ESTIMATION SECTION 106

DEMODULA-TION SECTION 107

N

10

COMBINING SECTION 301

DECODING SECTION 302

RECEPTION DATA

TRANSMISSION ANTENNA SELECTING SECTION 404

ANTENNA 2

TRANS-MISSION/RECEPTION SWITCHING SECTION 201

RADIO RECEPTION PROCESSING SECTION 202

COMBINING SECTION 210

RECEPTION POWER MEASURING SECTION 204

ADJACENT CELL PILOT EXTRACTING SECTION 203

PILOT EXTRACTING SECTION 205

CHANNEL ESTIMATION SECTION 206

DEMODULA-TION SECTION 207

N

20

RADIO TRANSMISSION PROCESSING SECTION 403

MODULATION SECTION 402

CODING SECTION 401

TRANS-MISSION DATA

FIG.7

EP 1 715 600 A1

22

FIG.8

| MCS LEVEL | MCS | SNR | RECEPTION POWER IN MOBILE STATION |
|:---:|:---:|:---:|:---:|
| 1 | QPSK, R=1/3 | 2 dB | −100 dBm |
| 2 | QPSK, R=1/2 | 6 dB | −96 dBm |
| 3 | 16QAM, R=1/2 | 12 dB | −90 dBm |
| 4 | 16QAM, R=3/4 | 18 dB | −84 dBm |

FIG.9

START

ST10

MEASURE RECEPTION
POWER $|p_{11}|, |p_{12}|$

ST20

OBTAIN MCS LEVELS
$L_1, L_2$

ST30

$L_1 = L_2$?

NO

YES

ST50

MEASURE RECEPTION
POWER $|p_{21}|, |p_{22}|$

ST40

SELECT ANTENNA WITH
HIGHER MCS LEVEL

ST60

$|p_{21}| < |p_{22}|$?

NO

YES

ST70

SELECT ANTENNA 1

ST80

SELECT ANTENNA 2

FIG.10

FIG.11

FIG.12

<table>
<tr><td colspan="2">**INTERNATIONAL SEARCH REPORT**</td><td>International application No.<br>PCT/JP2005/002765</td></tr>
</table>

A. CLASSIFICATION OF SUBJECT MATTER
Int.Cl⁷ H04B7/26, 7/08

According to International Patent Classification (IPC) or to both national classification and IPC

B. FIELDS SEARCHED

Minimum documentation searched (classification system followed by classification symbols)
Int.Cl⁷ H04B7/26, 7/06, 7/08

Documentation searched other than minimum documentation to the extent that such documents are included in the fields searched
Jitsuyo Shinan Koho        1922-1996    Jitsuyo Shinan Toroku Koho   1996-2005
Kokai Jitsuyo Shinan Koho  1971-2005    Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-274687 A  (Matsushita Electric Industrial Co., Ltd.), 18 October, 1996 (18.10.96), Par. Nos. [0036] to [0043]; Figs. 13 to 14 (Family: none) | 1-8 |
| A | JP 2000-078644 A  (Daini Denden Kabushiki Kaisha), 14 March, 2000 (14.03.00), Full text; all drawings (Family: none) | 1-8 |
| A | WO 2003/041300 A1  (Qualcomm Inc.), 15 May, 2003 (15.05.03), Full text; all drawings & US 2003/0125040 A1    & EP 001442538 A & JP 2005-509360 A | 1-8 |

☒  Further documents are listed in the continuation of Box C.         ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
20 May, 2005 (20.05.05)

Date of mailing of the international search report
07 June, 2005 (07.06.05)

Name and mailing address of the ISA/
Japanese Patent Office

Authorized officer

Facsimile No.

Telephone No.

Form PCT/ISA/210 (second sheet) (January 2004)

**INTERNATIONAL SEARCH REPORT**

| International application No. |
|---|
| PCT/JP2005/002765 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-267999 A  (Sanyo Electric Co., Ltd.),<br>28 September, 2001 (28.09.01),<br>Full text; all drawings<br>& WO 2001/069816 A1      & AU 004115201 A<br>& CN 001429437 T | 1-8 |
| A | JP 2003-283411 A  (Sanyo Electric Co., Ltd.),<br>03 October, 2003 (03.10.03),<br>Full text; all drawings<br>& WO 2003/081808 A1 | 1-8 |
| A | JP 2001-285913 A  (Matsushita Electric<br>Industrial Co., Ltd.),<br>12 October, 2001 (12.10.01),<br>Par. Nos. [0056] to [0059]<br>& WO 2001/076301 A1      & US 2002/160716 A1<br>& EP 001185124 A1      & AU 004462101 A<br>& CN 001127878 B | 1-8 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000353994 A

- JP 2004051587 A